# EUROPÄISCHE PATENTSCHRIFT

(11) **EP 2 807 065 B1**
(45) Veröffentlichungstag und Bekanntmachung des Hinweises auf die Patenterteilung: **20.07.2016**
(21) Anmeldenummer: 13700472.7
(22) Anmeldetag: 03.01.2013
(51) Int. Cl.: B60W 30/10

(54) **VERFAHREN ZUR FAHRASSISTENZ UND FAHRASSISTENZSYSTEM**
METHOD FOR DRIVING ASSISTANCE AND DRIVING ASSISTANCE SYSTEM
PROCÉDÉ ET SYSTÈME D'AIDE À LA CONDUITE

(30) Priorität: 25.01.2012 DE 102012201051
(43) Veröffentlichungstag der Anmeldung: 03.12.2014
(73) Patentinhaber: Robert Bosch GmbH, 70442 Stuttgart (DE)
(72) Erfinder: VON ZITZEWITZ, Henning, 31137 Hildesheim (DE); MÜHLMANN, Karsten, 70499 Stuttgart (DE); EGELHAAF, Jan, 71229 Leonberg (DE); CANO, Raphael, 70180 Stuttgart (DE); VEPA, Leo, 89079 Ulm (DE)
(86) Internationale Anmeldenummer: PCT/EP2013/050036
(87) Internationale Veröffentlichungsnummer: WO 2013/110479

(56) Entgegenhaltungen:
- EP-A1- 1 852 325
- EP-A1- 2 273 471
- DE-A1-102010 001 258

## Beschreibung

### Stand der Technik

Die Erfindung betrifft ein Verfahren zur Fahrassistenz eines Fahrzeugs und ein Fahrassistenzsystem.

Durch die steigende Verkehrsdichte wird es besonders in Ballungszentren für Verkehrsteilnehmer schwierig, freie Parkplätze für das Fahrzeug zu finden. Der Fahrer sieht sich dazu gezwungen, engere Parklücken für das Fahrzeug auszunutzen, in die ein Navigieren nicht einfach ist. Diese Aufgabe wird ihm durch Parkassistenten, d. h. Fahrassistenzsystemen zur Unterstützung des Parkvorgangs erleichtert.

Die Fahrassistenzsysteme können ein unterstütztes, ein halbautomatisches oder ein vollautomatisches Fahren des Fahrzeugs auf die Parkposition realisieren. Hierzu werden in Abhängigkeit einer aktuellen Position des Fahrzeugs und einer bekannten Zielposition einem Fahrer des Fahrzeugs oder einem System zur Steuerung des Fahrzeugs Lenkkommandos übermittelt, um das Fahren des Fahrzeugs zu unterstützen oder auszuführen. Die Lenkkommandos können auf einer Anzeigeeinheit an den Fahrer ausgegeben werden, so dass dieser dem vorgeschlagenen Weg durch Steuern, Beschleunigen und Bremsen des Fahrzeugs folgen kann. Andere Fahrassistenzsysteme können selbst in die Steuerung und/oder in den Antriebsstrang des Fahrzeugs eingreifen, um eine Längs- und/oder Querregelung des Fahrzeugs selbstständig zu übernehmen. Der Fahrer kann dabei durch Betätigung von Gas oder Bremspedal den Parkvorgang steuern oder sogar aus dem Auto aussteigen und den Vorgang über einen externen Regler starten und stoppen, wobei hierdurch ein vollautomatisches Einparken ausgeführt wird.

Es sind Fahrassistenzsysteme bekannt, welche selbstständig eine Parklücke vermessen und entscheiden, ob ein Fahrzeug in die Parklücke passt oder nicht. Die DE 10 2005 027 642 A1 zeigt ein Verfahren zur Unterstützung eines Einparkvorgangs eines Fahrzeugs in eine seitlich zu dem zu parkenden Fahrzeug angeordnete Parklücke, wobei mittels einer seitlich an dem Fahrzeug angeordneten ersten Sensoranordnung die Parklücke erfasst wird. Die Sensoranordnung umfasst insbesondere Ultraschallsensoren, Radarsensoren oder LIDAR-Sensoren. Nachteilig an Ultraschallsystemen, Radarsensoren und LIDAR-Sensoren zur Vermessung von Parkplätzen ist, dass diese sich nicht in allen Situationen als besonders vorteilhaft erweisen, insbesondere, wenn sich absorbierende Medien in der Umgebung befinden oder wenn sich Gegenstände außerhalb des im Allgemeinen kegelförmigen Erfassungsbereichs der Sensoren befinden.

Die DE 10 2008 062 708 A1 beschreibt ein Verfahren zur Parklückenvermessung, welches eine Erfassung der Parklückendimension ermöglicht, wobei neben scannenden Lasersystemen auch Videokameras eingesetzt werden.

Es sind weitere Systeme bekannt, bei welchen Videokameras eine seitliche Umgebung überwachen. Die DE 10 2006 024 609 A1 zeigt ein Verfahren zur Überwachung eines Schwenkraums einer Fahrzeugtür an einem Kraftfahrzeug hinsichtlich des Vorhandenseins von Gefährdungsobjekten, bei welchem Bilddaten einer bei dem Fahrzeug angeordneten und auf einen seitlichen Umgebungsbereich des Fahrzeugs ausgerichteten Kamera erfasst werden. Dabei werden zu zumindest zwei unterschiedlichen Aufnahmezeitpunkten Bilddaten der Kamera aufgenommen, eine Bewegungsinformation des Kraftfahrzeugs zwischen den beiden Aufnahmezeitpunkten erfasst und anhand der aufgenommenen Bilddaten und der Bewegungsinformation ein dreidimensionales Umgebungsmodell erstellt und hinsichtlich des Vorhandenseins von Gefährdungsobjekten im Schwenkraum der Fahrzeugtür analysiert.

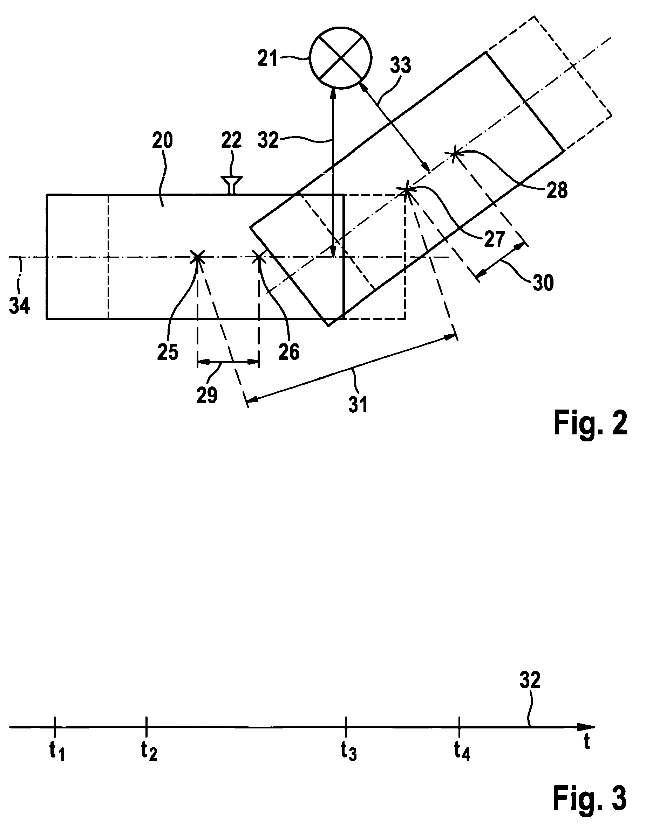

In der DE 10 2010 001 258 A1 ist ein Fahrerassistenzverfahren beschrieben. Dabei sind an einer Seite des Fahrzeugs zwei zueinander beabstandete Abstandssensoren vorgesehen. Es kann in die Fahrbewegung automatisch eingegriffen werden, sobald der ermittelte Abstand (siehe Figur 3) einen Minimalwert unterschreitet.

Die EP 1852325 A1 beschreibt ein Verfahren zur Folgeregelung für ein Kraftfahrzeug. Dabei kommen Seitenkameras zum Einsatz, die den Seitenbereich des Kraftfahrzeugs sensorisch überwachen.
Der Erfindung liegt die Aufgabe zugrunde, ein Verfahren zur Fahrassistenz und ein Fahrassistenzsystem anzugeben, welches weitere Funktionalitäten für den Einsatz der Seitenkamera bietet.

### Offenbarung der Erfindung

Die Aufgabe wird gelöst durch ein Verfahren zur Fahrassistenz mit den Merkmalen nach dem Anspruch 1 und durch ein Fahrassistenzsystem mit dem Merkmal nach dem Anspruch 10. Vorteilhafte Weiterbildung der Erfindung sind in den abhängigen Ansprüchen angegeben.

Es wird vorgeschlagen, dass eine Seitenkamera des Fahrzeugs eine Umgebung des Fahrzeugs erfasst und zu einer ersten Stereobasis erste Bilder der Seitenkamera ausgewählt werden, wobei aus den ersten Bildern eine erste 3D-Information ermittelt und ein erster Abstand des Fahrzeugs zu einem Objekt in der Umgebung des Fahrzeugs berechnet wird und zu einer zweiten Stereobasis zweite Bilder der Seitenkamera ausgewählt werden, wobei aus den zweiten Bildern eine zweite 3D-Information ermittelt und ein zweiter Abstand des Fahrzeugs zu dem Objekt in der Umgebung des Fahrzeugs berechnet wird und eine Information über das Verhältnis des ersten Abstands zum zweiten Abstand zur Querregelung des Fahrzeugs verwendet wird.

Die zu den Stereobasen ausgewählten Bilder sind im Allgemeinen zwei in einem zeitlichen Abstand zueinander aufgenommene Bilder der Seitenkamera. Aus zwei Bildern der Seitenkamera, welche zu einer Stereobasis ausgewählt sind, lässt sich bekanntermaßen eine 3D-Punktwolke der erfassten Umgebung extrahieren. Aus den für die Berechnung von zwei Stereobasen verwendeten Bildern kann eine zeitparametrisierte 3D-Punktwolke gewonnen werden, welche für die Querregelung des Fahrzeugs verwendet werden kann. Die Bestimmung der Stereobasen erfolgt bevorzugt in einer Regelschleife, bei welcher eine Sequenz von Stereobasen aufgenommen wird, woraus ein zeitgerastertes und damit zeitabhängiges 3D-Modell der Umgebung gewonnen werden kann.

Das Verhältnis des ersten zum zweiten Abstand des Fahrzeugs zum Objekt in der Umgebung des Fahrzeugs kann beispielsweise derart zur Querregelung des Fahrzeugs verwendet werden, dass auf einer Anzeigeeinheit an den Fahrer Lenkkommandos ausgegeben werden, so dass dieser einem vorgeschlagenen Weg durch Steuern, Beschleunigen und Bremsen des Fahrzeugs folgen kann. Das Verhältnis des ersten zum zweiten Abstand des Fahrzeugs zum Objekt in der Umgebung des Fahrzeugs kann auch derart verwendet werden, dass einem Lenksystem des Fahrzeugs Lenkkommandos übermittelt werden, welches eine Querregelung des Fahrzeugs selbstständig übernimmt.

### Vorteile der Erfindung

Besonders vorteilhaft ist das Verfahren bei einem Parkassistenten anwendbar, welcher im Rahmen eines Fahrassistenzsystems von einem Insassen, insbesondere von dem Fahrer selbst, aktivierbar ist oder bei Unterschreitung einer definierten Geschwindigkeit automatisch aktiviert wird. Dabei kann das Verfahren beispielsweise angewendet werden, um einen definierten Abstand des Fahrzeugs zu einem Begrenzungselement, wie beispielsweise zu einem Bordstein oder zu einem Übergang von der Fahrbahn zu einer Fläche anderer Beschaffenheit einzuhalten, beispielsweise zu einer Grasfläche. Das Verfahren kann insbesondere dann angewendet werden, wenn das Fahrzeug in eine Parklücke eingeparkt wird, welche sich in einer Reihe hintereinander parkender Fahrzeuge befindet. Bei dem Parkassistenten kann vorgesehen sein, dass der Fahrer einen Abstand zu einem erkannten Begrenzungselement manuell oder per Sprachkommandos definieren kann. Es ist üblich, dass der Fahrzeughersteller solche Abstände appliziert, also je nach Fahrzeugmodell festlegt. Der Fahrer kann dann beispielsweise zwischen wenigen Alternativen wählen, beispielsweise, dass ein bequemes Aussteigen für den Fahrer und/oder für den Beifahrer bzw. für weitere Personen möglich ist. Es ist auch denkbar, dass durch Analyse der Sitzbelegung der Platz auf der Beifahrerseite größer oder kleiner festgelegt wird.

Ein weiterer Anwendungsfall ist die Querregelung bei dem Vorwärts- oder Rückwärtseinparken des Fahrzeugs in eine Reihe nebeneinander geparkter Fahrzeuge, die beispielsweise senkrecht oder in einem von 90° verschiedenen Winkel zur Straße parken. Hier kann die Querregelung in Bezug auf Objekte erfolgen, die sich auf der Fahrerseite und/oder auf der Beifahrerseite befinden. Beispielsweise kann der Fahrer bei dem Parkassistenten für eine Reihe nebeneinander geparkter Fahrzeuge manuell oder per Sprachkommandos vorgeben, dass eine Querregelung auf Basis eines über die Fahrzeuglänge konstanten Abstands auf der Fahrerseite zu einem nebenparkenden Fahrzeug und/oder auf Basis eines über die Fahrzeuglänge konstanten Abstands auf Beifahrerseite und/oder durch einen geeigneten Mittelwert der Abstände erfolgen soll, insbesondere auf Basis einer Winkelhalbierenden, die durch einen Winkel definiert sein kann, der von einer rechten Fahrzeugaußenseite des auf der Fahrerseite nebenstehenden Fahrzeugs und von einer linken Fahrzeugaußenseite des auf der Beifahrerseite nebenstehenden Fahrzeugs eingeschlossen ist. Bei dem Parkassistenten kann auch vorgesehen sein, dass der Fahrer einen Abstand zu einem Begrenzungselement manuell oder per Sprachkommandos so einstellen kann, dass ein bequemes Aussteigen für den Fahrer und/oder für den Beifahrer bzw. für weitere Personen in der Reihe nebeneinander geparkter Fahrzeuge möglich ist. Es ist auch denkbar, dass durch Analyse der Sitzbelegung der Platz auf der Beifahrerseite größer oder kleiner festgelegt wird.

Eine weitere Anwendung des Verfahrens kann bei einer Schleichfahrt vorgesehen sein, beispielsweise bei einer Navigation durch einen engen Raum, der auf manchen Großraumparkplätzen zur Verfügung steht, oder etwa in Seitenstraßen. Die Querregelung kann in Bezug auf Objekte erfolgen, die sich auf der Fahrerseite und/oder auf der Beifahrerseite befinden. Bevorzugt kann der Fahrer manuell oder per Sprachkommando vorgeben, dass eine Querregelung auf Basis eines Objekts auf der Fahrerseite und/oder auf Basis eines Objekts auf Beifahrerseite erfolgen soll und wie viel Abstand eingehalten werden soll. Insbesondere kann das Verfahren in einem Stau angewendet werden, wo eine Querregelung derart erfolgen kann, dass bei einem Vorsetzen des Fahrzeugs eine Ausrichtung an den links und/oder rechtsfahrenden Fahrzeugen erfolgen kann. Ein weiterer Anwendungsfall für das erfindungsgemäße Verfahren kann gegeben sein, wenn beispielsweise das Fahrzeug in einem Parkhaus entlang einer auf- oder abschüssigen Spirale geführt werden muss. Um hier die Navigation zu erleichtern, kann beispielsweise ein konstanter Abstand zu einem Bordstein oder zu einer Zentralsäule eingehalten werden. Dabei kann vorgesehen sein, dass ein aktives Lenkmoment auf das Lenkrad gegeben wird, und der Fahrer die Kontrolle über das Gas behält.

Die Stereobasis wird als eine räumliche Distanz zwischen den Aufnahmeorten von zwei verschiedenen Bildern der Seitenkamera definiert. Bei einem bewegten Fahrzeug kann in Kenntnis des Verlaufs der Geschwindigkeit des Fahrzeugs ein zeitlicher Abstand der aufgenommenen Bilder in eine räumliche Distanz zwischen den Aufnahmeorten umgerechnet werden und umgekehrt. Die Bestimmung der räumlichen Distanz kann auch durch Odometrie erfolgen. Für verschiedene Geschwindigkeiten des Fahrzeugs ist die räumliche Distanz zwischen zwei Bildern der Seitenkamera, die zu den Zeitpunkten t und t+Δt aufgenommen worden sind, verschieden, da Δt gemäß Δt = Δs / v von der Geschwindigkeit abhängt.

Der zeitliche Abstand der Bilder, die für die Stereobasen verwendet werden, kann im einfachsten Fall konstant sein. Es ist aber vorteilhaft, wenn die *räumliche* Distanz zwischen den Aufnahmeorten der Bilder einen definierten Wert hat, die für die Berechnung der Stereobasis und für die Konstruktion des zeitabhängigen dreidimensionalen Modells der Umgebung verwendet werden. Die räumliche Distanz der für die Stereobasis verwendeten Bilder dürfen nicht zu groß sein, damit die Objekte, die in unterschiedlicher Perspektive sichtbar sind, in beiden Bildern zugeordnet werden können. Nach einer bevorzugten Ausführungsform weist die erste Stereobasis eine räumliche Erstreckung von 2 cm bis 50 cm, besonders bevorzugt 5 cm bis 10 cm auf. Wird das Verfahren beispielsweise in einem Fahrassistenzsystem zur Unterstützung eines Parkvorgangs angewendet, so kann die räumliche Erstreckung der ersten Stereobasis im Bereich von 2 cm bis 10 cm, insbesondere bei 5 cm festgelegt sein, so dass ein sehr genaues Navigieren möglich ist. Wird das Verfahren im Rahmen einer Schleichfahrt, etwa bei 5 km/h angewendet, so kann die räumliche Erstreckung der ersten Stereobasis verschieden gewählt sein, beispielsweise zwischen 5 cm und 10 cm oder zwischen 10 cm und 20 cm.

Besonders bevorzugt werden die der zweiten Stereobasis zugeordneten zweiten Bilder so gewählt, dass die zweite Stereobasis eine räumliche Erstreckung aufweist, die im Wesentlichen gleich derjenigen der ersten Stereobasis ist. Im Wesentlichen gleich bedeutet, dass zu berücksichtigen ist, dass eine Bildrate bei den Seitenkameras zwischen 15 Hz und 35 Hz liegen kann oder noch darüber. Um ein echtzeitfähiges System zu gewährleisten, werden üblicherweise mindestens 25 Hz Bildrate gewählt. Wegen der endlichen Bildrate wird der Abstand bei der Umrechnung von räumlichen Distanzen auf zeitliche Abstände entsprechend konsequent auf- oder abgerundet. Bei im Wesentlichen gleicher räumlicher Erstreckung der Stereobasen lässt sich besonders gut ein in der 3d-Punktwolke eventuell vorhandenes bewegliches Objekt detektieren. Es kann aber auch vorgesehen sein, dass die der zweiten Stereobasis zugeordneten zweiten Bilder so gewählt werden, dass die zweite Stereobasis eine räumliche Erstreckung aufweist, welche größer oder kleiner als die erste räumliche Erstreckung ist. Hierdurch kann ein Zoom simuliert werden, so dass eine detektierte 3D-Punktwolke aus einer Perspektive untersucht wird, die eine Auflösung von vergleichbaren Strukturen in einem zu der ersten Stereobasis unterschiedlichen Abstand erlaubt.

Ein erster Referenzort für die erste Stereobasis kann bestimmt sein durch die Aufnahme des ersten Bildes, das für die Berechnung der ersten Stereobasis verwendet wird. Ebenso kann ein zweiter Referenzort für die zweite Stereobasis der Zeitpunkt sein, bei welchem das erste Bild aufgenommen wird, welches zur Berechnung der zweiten Stereobasis verwendet wird. Der zeitliche Abstand der Referenzorte zwischen der ersten Stereobasis und der zweiten Stereobasis kann in einer Regelschleife konstant sein. Es ist aber vorteilhaft, wenn die räumliche Distanz zwischen den Stereobasen, die für die Konstruktion des zeitabhängigen dreidimensionalen Modells der Umgebung verwendet werden, einen definierten Wert hat. Die räumliche Distanz der Stereobasen zueinander kann dem jeweiligen Anwendungsfall angepasst sein. Nach einer bevorzugten Ausführungsform liegt zwischen einem Referenzort der ersten Stereobasis und einem Referenzort der zweiten Stereobasis eine räumliche Distanz von 2 cm bis 50 cm, besonders bevorzugt 5 cm bis 10 cm. Wird das System beispielsweise in einem Fahrassistenzsystem zur Unterstützung eines Einparkvorgangs verwendet, so kann die räumliche Distanz zwischen den Stereobasen im Bereich 2 cm bis 10 cm, insbesondere bei 5 cm gewählt sein, so dass ein sehr genaues Navigieren möglich ist. Wird das System im Rahmen einer Schleichfahrt verwendet, so kann die räumliche Distanz zwischen den Stereobasen verschieden gewählt sein, beispielsweise zwischen 5 cm und 10 cm oder zwischen 10 cm und 20 cm.

Bevorzugt werden räumliche Erstreckungen der Stereobasen und/oder räumliche Distanzen von Referenzorten zwischen den Stereobasen abhängig von der Geschwindigkeit des Fahrzeugs gewählt. So kann beispielsweise bei einer Fahrzeuggeschwindigkeit von 6 km/h bis 15 km/h ein erster Modus vorgesehen sein, welcher räumliche Erstreckungen der Stereobasen und/oder räumliche Distanzen von Referenzorten zwischen den Stereobasen beispielsweise zwischen 5 cm und 10 cm oder zwischen 10 cm und 20 cm vorsieht und unterhalb einer Fahrzeuggeschwindigkeit von 10 km/h, insbesondere unterhalb von 6 km/h ein weiterer Modus vorgesehen sein, welcher räumliche Erstreckungen der Stereobasen und/oder räumliche Distanzen von Referenzorten zwischen den Stereobasen von 2 cm bis 10 cm, insbesondere bei 5 cm vorsieht. Besonders vorteilhaft ist, dass je nach Anwendungsfall nur diejenige 3D-Information berechnet wird, welche relevant ist. Bei höheren Geschwindigkeiten können weniger Berechnungen notwendig sein. Bei niedrigen Geschwindigkeiten, beispielsweise bei einer vorsichtigen Vorbeinavigation des Fahrzeugs an einem Hindernis wie an einem weiteren Fahrzeug kann eine höhere Berechnungsrate der Stereobasen nötig sein, so dass eine besonders präzise Berechnung des 3D-Modells der Umgebung erreicht wird. Es können auch feinere Unterteilungen bezüglich der Geschwindigkeiten möglich sein als lediglich zwei Modi, beispielsweise drei Modi oder vier Modi.

Nach einer Ausführungsform wird das Verfahren in einer Tempo-30-Zone oder in Wohngebieten mit eng zugeparkten Gassen oder in engen Baustellen angewendet oder ist dort anwendbar. Dabei kann eine seitliche Kollision mit LKWs oder Betonwänden vermieden werden, da unter Umständen solche Hindernisse nicht immer aus den Frontkamerabildern zu prädizieren sind. Alternativ dazu oder zusätzlich dazu kann wird das Verfahren bei einer Fahrzeuggeschwindigkeit unterhalb von 15 km/h, insbesondere unterhalb von 10 km/h, bevorzugt unterhalb von 6 km/h angewendet oder ist dann anwendbar. Mit anderen Worten kann vorgesehen sein, dass das Verfahren in einigen Ausführungsformen der Erfindung oberhalb von definierten Grenzgeschwindigkeiten, wie beispielsweise oberhalb von 6 km/h, 10 km/h oder 15 km/h nicht angewendet werden kann. Hierdurch wird unnötiger Rechenaufwand vermieden und das Verfahren technisch auf diejenigen Fälle beschränkt in denen das zeitabhängige 3D-Modell der seitlichen Fahrzeugumgebung aussagekräftige Informationen bieten kann.

Nach einer bevorzugten Ausführungsform der Erfindung wird ein zeitabhängiges 3D-Modell der seitlichen Fahrzeugumgebung in einem Bereich ermittelt, der außerhalb eines Erfassungsbereichs einer Frontkamera und/oder einer Rückkamera liegt. Durch die Frontkamera und/oder durch die Rückkamera wird ein Bereich erfasst, welcher sich teilweise mit dem Erfassungsbereich der Seitenkamera überlappen kann. In dem Fall, wenn übereinanderliegende Erfassungsbereiche der Kameras vorliegen, kann auf der Seitenkamera eine *region of interest* (ROI), d. h. ein Auswertebereich definiert werden, innerhalb dessen das zeitabhängige 3D-Modell berechnet wird, und außerhalb dessen die Umgebung ausreichend präzise durch weitere Kameras erfasst und beurteilt werden kann. Das seitliche 3D-Modell wird also bevorzugt lediglich in denjenigen Bereichen berechnet, in denen die Frontkamera und/oder die Rückkamera nichts sieht. Hierdurch kann der Rechenaufwand erheblich verringert werden.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei dem Computerprogramm kann es sich beispielsweise um ein Modul zur Implementierung eines Fahrassistenzsystems oder eines Subsystems hiervon in einem Fahrzeug handeln oder um eine Applikation für Fahrassistenzfunktionen, welche auf einem Smartphone ausführbar ist. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-Rom, DVD oder einem USB-Stick. Zusätzlich oder alternativ kann das Computerprogramm auf einer Computereinrichtung wie etwa auf einem Server zum Herunterladen bereitgestellt werden, z.B. über ein Datennetzwerk wie das Internet oder eine Kommunikationsverbindung wie etwa eine Telefonleitung oder eine drahtlose Verbindung.

Erfindungsgemäß wird außerdem ein Fahrassistenzsystem vorgeschlagen, insbesondere zur Ausführung eines der beschriebenen Verfahren, aufweisend
- eine Seitenkamera zur Erfassung einer Fahrzeugumgebung,
- ein Modul zur Ermittlung einer Stereobasis gegebenenfalls anhand von Fahrzeuginformationen,
- ein Modul zur Auswahl von Bildern der Seitenkamera zu einer Stereobasis,
- ein Modul zur Berechnung von Abständen des Fahrzeugs zu Objekten in der Umgebung des Fahrzeugs aus den zu einer Stereobasis ausgewählten Bildern der Seitenkamera und
- ein Modul zur Berechnung von Verhältnissen von zwei Abständen des Fahrzeugs zu einem Objekt in der Umgebung des Fahrzeugs.

Das Fahrassistenzsystem kann eine Fusionskomponente aufweisen, welche Daten der Seitenkamera mit Daten eines weiteren Sensorsystems, beispielsweise eines Ultraschallsensorsystems, Radarsystems und/oder eines LIDAR-Systems kombiniert und verarbeitet, wobei hierdurch beispielsweise die Objekte in der seitlichen Umgebung plausibilisiert werden können und/oder weitere Informationen zur Berechnung eines zeitabhängigen 3D-Modells der Umgebung einfließen können.

Die Komponente zur Querregelung des Fahrzeugs kann eine Komponente zur Ausgabe von Lenkkommandos auf einer Anzeigeeinheit an den Fahrer aufweisen, so dass dieser einem vorgeschlagenen Weg durch Steuern, Beschleunigen und Bremsen des Fahrzeugs folgen kann und/oder eine Komponente zur Ansteuerung eines Lenksystems des Fahrzeugs aufweisen, um ein halbautomatisches oder vollautomatisches Fahren des Fahrzeugs auszuführen.

Die Seitenkamera kann jede zur Aufnahme von seitlichen Fahrzeugumgebungen geeignete Kamera sein, insbesondere eine im Seitenspiegel des Fahrzeugs verbaute *surround-view-*Kamera (SVS-Kamera) oder eine seitwärts aus der Fahrzeugschnauze heraus gerichtete *side-view-assistant-Kamera* (SVA-Kamera) oder eine *blind-spot*-detection-Kamera (BSD-Kamera).

Weitere Ausführungsbeispiele und Vorteile der Erfindung werden nachfolgend in Bezug auf die Zeichnung beschrieben.

### Kurze Beschreibung der Zeichnungen

Es zeigen
Figur 1 Eine schematische Darstellung funktionaler Komponenten eines Fahrassistenzsystems,
Figur 2 Eine Draufsicht auf eine Situation mit einem Fahrzeug und einer seitlichen Fahrzeugumgebung und
Figur 3 Einen Zeitstrahl mit Zeitpunkten zur Bestimmung von Stereobasen.

### Ausführungsformen der Erfindung

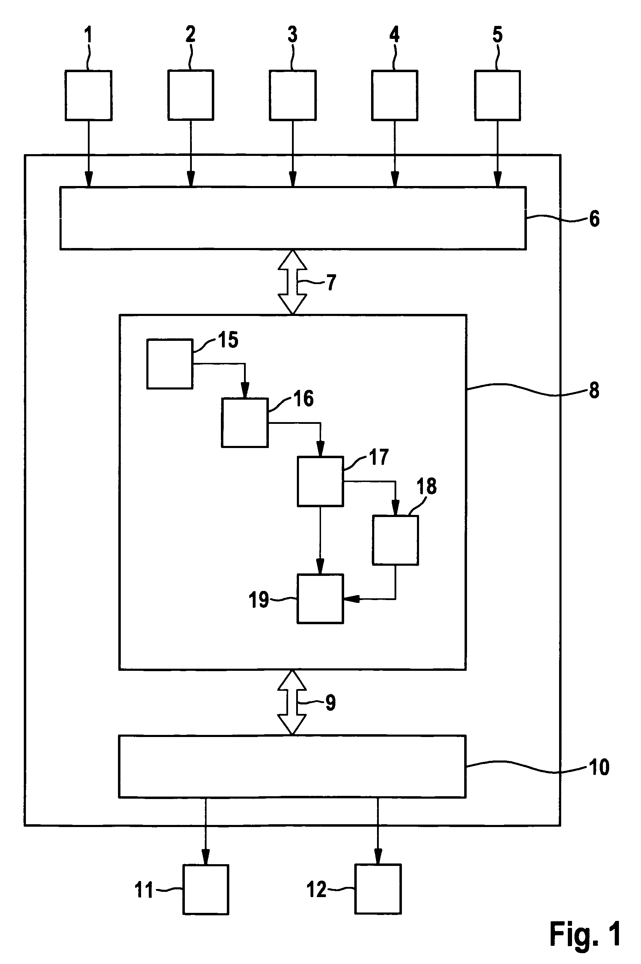

Figur 1 zeigt eine schematische Darstellung funktionaler Komponenten eines Fahrassistenzsystems gemäß vorliegender Erfindung. Das Fahrassistenzsystem ist dazu ausgebildet, ein zeitabhängiges 3D-Modell der seitlichen Fahrzeugumgebung zu konstruieren und zur Querregelung des Fahrzeugs zu verwenden.

Das Fahrassistenzsystem umfasst eine Seitenkamera 1, welche als eine Monokularkamera ausgebildet sein kann. Die Seitenkamera 1 ist bevorzugt eine im Seitenspiegel des Fahrzeugs verbaute *surround-view-Kamera* (SVS-Kamera) oder als eine seitwärts aus der Fahrzeugschnauze heraus gerichtete *side-view-assistant*-Kamera (SVA-Kamera). Sie kann aber auch eine *blind-spot*-detection-Kamera (BSD-Kamera) sein.

Das Fahrassistenzsystem umfasst gegebenenfalls weitere Sensoren 2, insbesondere weitere Seitenkameras und/oder Frontkameras und/oder Rückfahrkameras und/oder Ultraschallsensoren und/oder Radarsensoren und/oder LIDAR-Sensoren.

Das Fahrassistenzsystem umfasst außerdem eine Komponente 3 zur Erfassung von Fahrzeuginformationen, im Folgenden auch Fahrzeugdatensensor 3, welcher Daten über die aktuelle Geschwindigkeit des Fahrzeugs, über Odometrie und/oder über einen Lenkwinkel des Fahrzeugs bereitstehen. Das Fahrassistenzsystem kann außerdem einen GPS-Empfänger 4 aufweisen, so dass dem Fahrassistenzsystem Informationen über die aktuellen Positionen des Fahrzeugs bereitstehen.

Das Fahrassistenzsystem umfasst außerdem eine Komponente 5 zur Erfassung von Sollzuständen, welcher vom Fahrer manuell oder sprachlich eingegebene und/oder vorgegebene Daten wie Sollabstände und/oder Bezugsseiten bereitstehen.

Die Daten der Seitenkamera 1, der weiteren Sensoren 2, der Fahrzeugdatensensors 3, des GPS-Empfängers 4 und der Komponente 5 zur Erfassung von Sollzuständen werden in einer Eingangsschaltung 6 empfangen. Die Eingangsschaltung 6 ist mit einem Bussystem 7 zum Datenaustausch mit einer Datenverarbeitungseinrichtung 8 verbunden. Die Datenverarbeitungseinrichtung 8 ist mit einem weiteren 9 oder demselben 7 Bussystem mit einer Ausgangsschaltung 10 verbunden. Über die Ausgangsschaltung 10 kann eine Lenkeinrichtung 11 ansteuerbar sein, die eine Querregelung des Fahrzeugs vermitteln kann, sowie eine Anzeige 12.

Die Datenverarbeitungseinrichtung 8 umfasst ein Modul 15 zur Berechnung von Stereobasen, welches Daten des Fahrzeugdatensensors 3 verarbeitet. Über Odometrie und/oder über die aktuelle Geschwindigkeit kann das Modul räumliche Abstände in zeitliche Abstände umrechnen und umgekehrt. Das Modul 15 zur Berechnung von Stereobasen stellt Zeitpunkte bereit, zu denen Bilder der Seitenkamera auszuwählen sind. In einigen Ausführungsformen kann die Stereobasis auch zeitlich konstant sein.

Die Datenverarbeitungseinrichtung 8 umfasst ein Modul 16 zur Auswahl von Bildern der Seitenkamera, welches Daten der Seitenkamera 1 und Daten des Moduls 15 zur Berechnung der Stereobasis verarbeitet. Auf Basis der in Abhängigkeit der Bildaufnahmefrequenz gerundeten Zeitpunkte, die das Modul 15 zur Berechnung von Stereobasen vorgegeben hat und gegebenenfalls unter Berücksichtigung eines Abstands zu einer vorherigen Stereobasis wählt das Modul 16 zur Auswahl von Bildern der Seitenkamera diejenigen Bilder aus, welche der Stereobasis zugeordnet werden.

Die Datenverarbeitungseinrichtung 7 umfasst ein weiteres Modul 17 zur Berechnung von Abständen des Fahrzeugs zu Objekten in der Umgebung des Fahrzeugs aus den zu einer Stereobasis ausgewählten Bildern der Seitenkamera. Das Modul 17 zur Berechnung von Abständen des Fahrzeugs zu Objekten verarbeitet die vom Modul 16 zur Auswahl von Bildern der Seitenkamera ausgewählten Bilder und ermittelt über an sich bekannte Verfahren aus den Bildern für jede Stereobasis eine dreidimensionale Punktwolke. Aus der dreidimensionalen Punktwolke werden Abstände des Fahrzeugs zu Objekten in der Umgebung des Fahrzeugs ermittelt. Auch die gesamte erfasste Umgebung kann als ein derartiges Objekt betrachtet werden und ein Abstand der ermittelten Umgebung zum Fahrzeug ermittelt werden.

Das Modul 17 zur Berechnung von Abständen des Fahrzeugs zu Objekten kann zur Erstellung einer zeitabhängigen dreidimensionalen Umgebung des Fahrzeugs geeignet sein. Zur Berechnung des zeitabhängigen 3D-Modells sind die Bilder zumindest zweier Stereobasen nötig, welche vom Modul 16 zur Auswahl von Bildern der Seitenkamera zur Verfügung gestellt werden. Das Modul 17 zur Berechnung von Abständen des Fahrzeugs zu Objekten kann auf den Bildern zusammenhängende Bereiche ermitteln und gegebenenfalls in Fusion mit Daten weiterer Umweltsensoriken Objekte, wie Fahrzeuge, Bordsteine oder Verkehrsteilnehmer klassifiziert und deren Abstände zum Fahrzeug einzeln genau ermitteln.

Die Datenverarbeitungseinrichtung 7 umfasst ein weiteres Modul 18 zur Berechnung von Verhältnissen von Abständen des Fahrzeugs zu Objekten in der Umgebung des Fahrzeugs im Verlauf der Zeit. Das Modul 18 zur Berechnung von Verhältnissen von Abständen des Fahrzeugs zu Objekten verarbeitet die Daten des Moduls 17 zur Berechnung von Abständen des Fahrzeugs zu Objekten. Wenn der Abstand zu einem Objekt oder zu der Umgebung größer wird, dann ist das Verhältnis zweier zeitlich nacheinander bestimmter Abstände > 1. Wenn der Abstand kleiner wird, dann ist das Verhältnis < 1.

Die Datenverarbeitungseinrichtung umfasst außerdem ein Modul 19 zur Regelung eines seitlichen Abstands. Das Modul 19 zur Regelung des seitlichen Abstands verarbeitet das Verhältnis zweier zeitlich nacheinander bestimmter Abstände des Fahrzeugs zu Objekten in der Umgebung des Fahrzeugs vom Modul 18 zur Berechnung von Verhältnissen von Abständen des Fahrzeugs zu Objekten. Außerdem empfängt und verarbeitet es die ermittelten Abstände des Fahrzeugs zu den Objekten vom Modul 17 zur Berechnung von Abständen des Fahrzeugs zu Objekten. Das Modul 19 zur Regelung des seitlichen Abstands verarbeitet darüber hinaus Daten von der Komponente 5 zur Erfassung von Sollzuständen. Je nachdem, ob der Sollwert erreicht ist oder über- oder unterschritten ist, regelt es eine Verringerung, eine Vergrößerung oder ein Gleichbleiben des Abstands. Das Modul 19 zur Regelung des seitlichen Abstands kann hierzu über die Ausgangsschaltung 10 die Lenkeinrichtung 11 und/oder die Anzeige 12 ansteuern.

Figur 2 zeigt eine Draufsicht auf eine Situation mit einem Fahrzeug 20 und einem fahrerseitig angeordneten Hindernis 21. Das Fahrzeug 20 ist mit einem erfindungsgemäßen Fahrassistenzsystem ausgestattet, welches mit Bezug auf die Figur 1 beschrieben wurde. An dem Fahrzeug 20 ist eine Seitenkamera 22 auf der Fahrerseite angeordnet. Eine Seitenkamera auf der Beifahrerseite kann vorgesehen sein, ist der Übersicht halber nicht dargestellt.

Das Fahrzeug 20 bewegt sich langsam an dem Hindernis 21 vorbei, und das Fahrassistenzsystem schaltet sich automatisch ein, beispielsweise unterhalb einer Geschwindigkeit von 15 km/h oder unterhalb einer Geschwindigkeit von 10 km/h oder unterhalb einer Geschwindigkeit von 6 km/h. Es kann auch vorgesehen sein, dass der Fahrer das Fahrassistenzsystem beispielsweise im Rahmen einer Parkassistenz selbst einschaltet. Während der Fahrt nimmt die Seitenkamera 22 die seitliche Umgebung des Fahrzeugs 20 auf.

Zu einem ersten Zeitpunkt t₁ befindet sich das Fahrzeug 20 an einem ersten Ort 25, welcher geeignet definiert sein kann, beispielsweise durch die Lage eines Fahrzeugmittelpunkts oder etwa eines Schwerpunkts. Zu einem zweiten Zeitpunkt t₂ befindet sich das Fahrzeug 20 an einem zweiten Ort 26. Zu einem dritten Zeitpunkt t₃ befindet sich das Fahrzeug 20 an einem dritten Ort 27. Zu einem vierten Zeitpunkt t₄ befindet sich das Fahrzeug 20 an einem vierten Ort 28. Der erste Ort 25 und der zweite Ort 26 sind voneinander durch eine erste räumliche Distanz beabstandet. Die erste räumliche Distanz wird als eine erste Stereobasis 29 bezeichnet. Die erste Stereobasis umfasst zwei erste Referenzorte 25, 26.

Der dritte Ort 27 und der vierte Ort 28 sind voneinander durch eine zweite räumliche Distanz beabstandet. Die zweite räumliche Distanz wird als zweite Stereobasis 30 bezeichnet und umfasst zwei zweite Referenzorte 27, 28. Eine räumliche Distanz 31 zwischen den beiden Stereobasen ist durch die Distanz des ersten Orts 25 zum dritten Ort 27 gegeben. Die räumliche Distanz 31 zwischen den Stereobasen hat bevorzugt einen definierten Wert und kann in Abhängigkeit von der Geschwindigkeit des Fahrzeugs festgelegt sein. Ebenso haben die räumlichen Distanzen, welche jeweils eine Stereobasis definieren, bevorzugt einen definierten Wert und können in Abhängigkeit von der Geschwindigkeit des Fahrzeugs festgelegt sein.

Das Fahrassistenzsystem berechnet in dem Beispiel einen Abstand des Fahrzeugs 20 zum Objekt 21 zu zwei verschiedenen Zeitpunkten, wobei ein erster Abstand 32 der ersten Stereobasis 29 zugeordnet wird und ein zweiter Abstand 33 der zweiten Stereobasis 30 zugeordnet wird. Die Abstände 32, 33 des Fahrzeugs 20 zum Objekt 21 können jeweils als ein Abstand eines Punktes zu einer Geraden definiert sein, d. h. ein Abstand des Objekts 21 zu einer Hauptachse 34 des Fahrzeugs, die senkrecht zu den Radachsen und durch die Fahrzeugmitte verlaufen kann. Sie können sich auf die Achse des Fahrzeugs zum ersten ersten Referenzort 25 oder zum zweiten ersten Referenzort 26 beziehen. Die Abstände des Fahrzeugs 20 zum Objekt 21 können insbesondere aber auch als Abstände des Objekts zu einer äußeren Kontur des Fahrzeugs, insbesondere inklusive Anbauteile wie Spiegel definiert sein.

Wenn während der Vorbeifahrt des Fahrzeugs 20 am Objekt 21 der Abstand 32, 33 größer wird, dann ist das Verhältnis zweier zeitlich nacheinander bestimmter Abstände > 1. Wenn der Abstand kleiner wird, dann ist das Verhältnis < 1. Je nachdem, ob ein definierter Sollwert erreicht ist oder über- oder unterschritten ist, wird eine Verringerung, eine Vergrößerung oder ein Gleichbleiben des Abstands geregelt.

Figur 3 zeigt eine Zeitleiste 33, auf welcher beispielhaft alternative Zeitpunkte eingetragen sind, zu welchen Stereobasen berechnet werden. Zu einem ersten Zeitpunkt t₁ kann ein erstes Bild für eine Stereobasis gewählt werden. Zu einem Zeitpunkt t₂ kann ein erstes Bild für eine zweite Stereobasis gewählt werden. Zu einem Zeitpunkt t₃ kann ein zweites Bild für die erste Stereobasis gewählt werden. Zu einem Zeitpunkt t₄ kann ein zweites Bild für die zweite Stereobasis gewählt werden. Zu dem zweiten Zeitpunkt t₂ kann alternativ auch das zweite Bild für die erste Stereobasis gewählt werden. Zu dem dritten Zeitpunkt t₃ kann dann das erste Bild für die zweite Stereobasis gewählt werden und zu dem vierten Zeitpunkt t₄ kann das zweites Bild für die zweite Stereobasis gewählt werden. Die letztgenannte Alternative ist in Figur 2 dargestellt. Bei sich ändernder Geschwindigkeit des Fahrzeugs sind die zeitlichen Abstände, welche die Stereobasen definieren, im Allgemeinen nicht linear miteinander verknüpft. Um möglichst genaue 3D-Informationen zu extrahieren, wird daher die Stereobasis räumlich definiert.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen. Der Schubumfang wird durch die Ansprüche definiert.

## Patentansprüche

1. Verfahren zur Fahrassistenz, wobei eine Seitenkamera (1, 22) eines Fahrzeugs (20) eine Umgebung des Fahrzeugs (20) erfasst und zu einer ersten Stereobasis (29) erste Bilder der Seitenkamera (1, 22) ausgewählt werden, wobei aus den ersten Bildern eine erste 3D-Information ermittelt und ein erster Abstand (32) des Fahrzeugs (20) zu einem Objekt (21) in der Umgebung des Fahrzeugs (20) berechnet wird, **dadurch gekennzeichnet, dass** zu einer zweiten Stereobasis (30) zweite Bilder der Seitenkamera (1, 22) ausgewählt werden, wobei aus den zweiten Bildern eine zweite 3D-Information ermittelt und ein zweiter Abstand (33) des Fahrzeugs (20) zu dem Objekt (21) in der Umgebung des Fahrzeugs (20) berechnet wird und eine Information über das Verhältnis des ersten Abstands (32) zum zweiten Abstand (33) zur Querregelung des Fahrzeugs (20) verwendet wird.

2. Verfahren nach Anspruch 1, **dadurch gekennzeichnet, dass** die erste Stereobasis (29) eine räumliche Erstreckung von 2 cm bis 50 cm, insbesondere 5 cm bis 10 cm aufweist.

3. Verfahren nach einem der vorhergenenden Ansprüche, **dadurch gekennzeichnet, dass** die zweite Stereobasis (30) eine räumliche Erstreckung aufweist, die im Wesentlichen gleich derjenigen der ersten Stereobasis (29) ist.

4. Verfahren nach einem der vorhergenenden Ansprüche, **dadurch gekennzeichnet, dass** zwischen einem Referenzort (25, 26) der ersten Stereobasis (29) und einem Referenzort (27, 28) der zweiten Stereobasis (30) eine räumliche Distanz von 2 cm bis 50 cm, insbesondere 5 cm bis 10 cm liegt.

5. Verfahren nach einem der vorhergehenden Ansprüche, **dadurch gekennzeichnet, dass** räumliche Erstreckungen der Stereobasen (29, 30) und/oder räumliche Distanzen von Referenzorten (25, 26; 27, 28) zwischen den Stereobasen (29, 30) abhängig von der Geschwindigkeit des Fahrzeugs (20) sind.

6. Verfahren nach einem der vorhergehenden Ansprüche, **dadurch gekennzeichnet, dass** räumliche Erstreckungen der Stereobasen (29, 30) und/oder räumliche Distanzen von Referenzorten (25, 26; 27, 28) zwischen den Stereobasen durch Odometrie und/oder durch GPS-Signale ermittelt werden.

7. Verfahren nach einem der vorhergehenden Ansprüche, **dadurch gekennzeichnet, dass** das Verfahren bei einer Fahrzeuggeschwindigkeit unterhalb von 15 km/h, insbesondere unterhalb von 10 km/h, bevorzugt unterhalb von 6 km/h angewendet wird oder anwendbar ist.

8. Verfahren nach einem der vorhergehenden Ansprüche, **dadurch gekennzeichnet, dass** ein zeitabhängiges 3D-Modell der seitlichen Fahrzeugumgebung in einem Bereich ermittelt wird, der außerhalb eines Erfassungsbereichs einer Frontkamera und/oder einer Rückkamera liegt.

9. Computerprogramm zur Durchführung eines der Verfahren nach einem der Ansprüche 1 bis 8, wobei das Computerprogramm auf einer programmierbaren Computereinrichtung ausgeführt wird.

10. Fahrassistenzsystem, insbesondere zur Ausführung eines der Verfahren nach einem der Ansprüche 1 bis 8, aufweisend
- eine Seitenkamera (1, 22) zur Erfassung einer Fahrzeugumgebung,
- ein Modul (15) zur Ermittlung einer Stereobasis (29, 30), gegebenenfalls anhand von Fahrzeuginformationen,
- ein Modul (16) zur Auswahl von Bildern der Seitenkamera (1, 22) zu einer Stereobasis (29, 30),
- ein Modul (17) zur Berechnung von Abständen (32, 33) des Fahrzeugs (20) zu Objekten (21) in der Umgebung des Fahrzeugs (20) aus den zu einer Stereobasis (29, 30) ausgewählten Bildern der Seitenkamera (1, 22) und
- ein Modul (18) zur Berechnung von Verhältnissen von zwei Abständen (32, 33) des Fahrzeugs (20) zu einem Objekt (21) in der Umgebung des Fahrzeugs (20).

## Claims

1. Driving assistance method, wherein a side camera (1, 22) of a vehicle (20) captures an environment of the vehicle (20) and first images from the side camera (1, 22) are selected for a first stereo base (29), wherein a first item of 3-D information is determined from the first images and a first distance (32) between the vehicle (20) and an object (21) in the environment of the vehicle (20) is calculated, **characterized in that** second images from the side camera (1, 22) are selected for a second stereo base (30), wherein a second item of 3-D information is determined from the second images and a second distance (33) between the vehicle (20) and the object (21) in the environment of the vehicle (20) is calculated, and an item of information relating to the ratio of the first distance (32) to the second distance (33) is used for the lateral control of the vehicle (20).

2. Method according to Claim 1, **characterized in that** the first stereo base (29) has a spatial extent of 2 cm to 50 cm, in particular 5 cm to 10 cm.

3. Method according to one of the preceding claims, **characterized in that** the second stereo base (30) has a spatial extent which is substantially the same as that of the first stereo base (29).

4. Method according to one of the preceding claims, **characterized in that** a spatial distance of 2 cm to 50 cm, in particular 5 cm to 10 cm, lies between a reference location (25, 26) of the first stereo base (29) and a reference location (27, 28) of the second stereo base (30).

5. Method according to one of the preceding claims, **characterized in that** spatial extents of the stereo bases (29, 30) and/or spatial distances of reference locations (25, 26; 27, 28) between the stereo bases (29, 30) are dependent on the speed of the vehicle (20).

6. Method according to one of the preceding claims, **characterized in that** spatial extents of the stereo bases (29, 30) and/or spatial distances of reference locations (25, 26; 27, 28) between the stereo bases are determined by means of odometry and/or GPS signals.

7. Method according to one of the preceding claims, **characterized in that** the method is or can be used at a vehicle speed below 15 km/h, in particular below 10 km/h, preferably below 6 km/h.

8. Method according to one of the preceding claims, **characterized in that** a time-dependent 3-D model of the lateral vehicle environment is determined in a region outside a capture range of a front camera and/or a rear camera.

9. Computer program for carrying out one of the methods according to one of Claims 1 to 8, wherein the computer program is executed on a programmable computer device.

10. Driving assistance system, in particular for carrying out one of the methods according to one of Claims 1 to 8, having
- a side camera (1, 22) for capturing a vehicle environment,
- a module (15) for determining a stereo base (29, 30), possibly on the basis of vehicle information,
- a module (16) for selecting images from the side camera (1, 22) for a stereo base (29, 30),
- a module (17) for calculating distances (32, 33) between the vehicle (20) and objects (21) in the environment of the vehicle (20) from the images from the side camera (1, 22) selected for a stereo base (29, 30), and
- a module (18) for calculating ratios of two distances (32, 33) between the vehicle (20) and an object (21) in the environment of the vehicle (20).

## Revendications

1. Procédé d'assistance au conducteur, une caméra latérale (1, 22) d'un véhicule (20) balayant un environnement du véhicule (20) et des premières images de la caméra latérale (1, 22) étant sélectionnées pour former une première base stéréoscopique (29), une première information 3D étant déterminée à partir des premières images et un premier écart (32) du véhicule (20) par rapport à un objet (21) dans l'environnement du véhicule (20) étant calculé, **caractérisé en ce que** des deuxièmes images de la caméra latérale (1, 22) sont sélectionnées pour former une deuxième base stéréoscopique (30), une deuxième information 3D étant déterminée à partir des deuxièmes images et un deuxième écart (33) du véhicule (20) par rapport à l'objet (21) dans l'environnement du véhicule (20) étant calculé et une information relative au rapport entre le premier écart (32) et le deuxième écart (33) étant utilisée pour la régulation transversale du véhicule (20).

2. Procédé selon la revendication 1, **caractérisé en ce que** la première base stéréoscopique (29) présente une projection dans l'espace de 2 cm à 50 cm, notamment de 5 cm à 10 cm.

3. Procédé selon l'une des revendications précédentes, **caractérisé en ce que** la deuxième base stéréoscopique (30) présente une projection dans l'espace qui est sensiblement égale à celle de la première base stéréoscopique (29).

4. Procédé selon l'une des revendications précédentes, **caractérisé en ce qu'**entre un lieu de référence (25, 26) de la première base stéréoscopique (29) et un lieu de référence (27, 28) de la deuxième base stéréoscopique (30) se trouve une distance spatiale de 2 cm à 50 cm, notamment de 5 cm à 10 cm.

5. Procédé selon l'une des revendications précédentes, **caractérisé en ce que** les projections dans l'espace des bases stéréoscopiques (29, 30) et/ou les distances spatiales des lieux de référence (25, 26 ; 27, 28) entre les bases stéréoscopiques (29, 30) sont dépendantes de la vitesse du véhicule (20).

6. Procédé selon l'une des revendications précédentes, **caractérisé en ce que** les projections dans l'espace des bases stéréoscopiques (29, 30) et/ou les distances spatiales des lieux de référence (25, 26 ; 27, 28) entre les bases stéréoscopiques sont déterminées par odométrie et/ou par des signaux GPS.

7. Procédé selon l'une des revendications précédentes, **caractérisé en ce que** le procédé est utilisé ou utilisable à une vitesse du véhicule inférieure à 15 km/h, notamment inférieure à 10 km/h, de préférence inférieure à 6 km/h.

8. Procédé selon l'une des revendications précédentes, **caractérisé en ce qu'**un modèle 3D dépendant du temps de l'environnement latéral du véhicule est déterminé dans une zone qui se trouve endehors d'une zone de balayage d'une caméra frontale et/ou d'une caméra arrière.

9. Programme informatique destiné à mettre en oeuvre l'un des procédés selon l'une des revendications 1 à 8, le programme informatique étant exécuté sur un dispositif informatique programmable.

10. Système d'assistance au conducteur, notamment destiné à mettre en oeuvre l'un des procédés selon l'une des revendications 1 à 8, comprenant
- une caméra latérale (1, 22) destinée à balayer un environnement du véhicule,
- un module (15) destiné à déterminer une base stéréoscopique (29, 30), le cas échéant à l'aide d'informations du véhicule,
- un module (16) destiné à sélectionner des images de la caméra latérale (1, 22) pour former une base stéréoscopique (29, 30),
- un module (17) destiné à calculer des écarts (32, 33) du véhicule (20) par rapport à des objets (21) dans l'environnement du véhicule (20) à partir des images de la caméra latérale (1, 22) sélectionnées pour former une base stéréoscopique (29, 30) et
- un module (18) destiné à calculer des rapports entre deux écarts (32, 33) du véhicule (20) par rapport à un objet (21) dans l'environnement du véhicule (20).
